# FASCICULE DE BREVET EUROPEEN

(11) **EP 3 440 859 B1**
(45) Date de publication et mention de la délivrance du brevet: **16.03.2022**
(21) Numéro de dépôt: 17722085.2
(22) Date de dépôt: 03.04.2017
(51) Int. Cl.: H04W 8/08, H04W 84/04

(54) **PROCÉDÉ D'ENREGISTREMENT D'UN TERMINAL MOBILE DANS UN RÉSEAU DE COMMUNICATION MOBILE**
VERFAHREN ZUR REGISTRIERUNG EINES MOBILEN ENDGERÄTS IN EINEM MOBILKOMMUNIKATIONSNETZWERK
METHOD OF REGISTERING A MOBILE TERMINAL IN A MOBILE COMMUNICATION NETWORK

(30) Priorité: 05.04.2016 FR 1652970
(43) Date de publication de la demande: 13.02.2019
(73) Titulaire: ORANGE, 92130 Issy-les-Moulineaux (FR)
(72) Inventeur: GAMISHEV, Todor, 75018 Paris (FR); MOUQUET, Antoine, 92400 Courbevoie (FR)
(86) Numéro de dépôt international: PCT/FR2017/050769
(87) Numéro de publication internationale: WO 2017/174910

(56) Documents cités:
- WO-A1-2010/086014
- GENERAL DYNAMICS UK LTD: "Proposed study of enhancements to Isolated E-UTRAN Operation for Public Safety (IOPS)", 3GPP DRAFT; S2-160409 IOPS SI DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. ST Kitts; 20160125 - 20160129 19 janvier 2016 (2016-01-19), XP051072279, Extrait de l'Internet: URL:http://www.3gpp.org/ftp/tsg_sa/WG2_Arc h/TSGS2_113_St_Kitts/Docs/ [extrait le 2016-01-19]
- GENERAL DYNAMICS UK LTD ET AL: "Add informative annex containing implementation and deployment guidelines for IOPS", 3GPP DRAFT; 23401_CR2903R2_IOPS_(REL-13)_S2-152937 TS23 401 CR2903 - IOPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG2, no. Sophia-Antipolis, France; 20150831 - 20150903 14 septembre 2015 (2015-09-14), XP051011885, Extrait de l'Internet: URL:http://www.3gpp.org/ftp/Meetings_3GPP_ SYNC/SA/Docs/ [extrait le 2015-09-14]
- ORANGE: "New solution: IOPS network using the backhaul for authentication only", 3GPP DRAFT; S2-161819_IOPS_SOL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FR; 20160411 - 20160415 5 avril 2016 (2016-04-05), XP051086781, Extrait de l'Internet: URL:http://www.3gpp.org/ftp/tsg_sa/WG2_Arc h/TSGS2_114_Sophia_Antipolis/Docs/ [extrait le 2016-04-05]
- ORANGE: "New solution: IOPS network using the backhaul for authentication only", 3GPP DRAFT; S2-165957_IOPS_SOL_ERICSSON, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung City, Taiwan; 20161017 - 20161021 24 octobre 2016 (2016-10-24), XP051169937, Extrait de l'Internet: URL:http://www.3gpp.org/ftp/tsg_sa/WG2_Arc h/TSGS2_117_Kaohsiung_City/Docs/ [extrait le 2016-10-24]
- ZTE COPORATION: "Authentication for IOPS", 3GPP DRAFT; S3-151902-AUTHENTICATION FOR IOPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Tallinn; 20150824 - 20150828 19 August 2015 (2015-08-19), XP051014633, Retrieved from the Internet: URL:http://www.3gpp.org/ftp/Meetings_3GPP_ SYNC/SA3/Docs/ [retrieved on 2015-08-19]

## Description

La présente invention concerne le domaine de l'accès à un réseau mobile de communication, et plus particulièrement l'accès à ce réseau lorsque la liaison d'accès entre la station de base et le cœur du réseau est dégradée et/ou limitée quant au débit.

Les réseaux mobiles de communication actuels reposent sur une architecture de type « EPS » (de l'anglais « Evolved Packet System »), telle que définie par l'organisme de standardisation 3GPP. Dans ce cadre, une procédure d'enregistrement, ou d'attachement, d'un terminal mobile auprès d'un réseau d'accès est définie.

Dans un réseau de type EPS, des stations de base, ou eNodeB, sont en charge des échanges radio avec le terminal mobile. Une station de base est reliée au cœur de réseau via une liaison de collecte qui achemine des flux à travers une interface notée S1. L'interface SI consiste en une première interface, notée Sl-U, destinée à acheminer du trafic entre la station de base et une passerelle de service notée S-GW, et une deuxième interface, notée SI-MME, destinée à acheminer des messages de contrôle entre la station de base et une entité de gestion de la mobilité, notée « MME » (de l'anglais « Mobile Management Entity »), responsable du contrôle dans un réseau « EPC » (« Evolved Packet Core »). Sans la liaison de collecte entre la station de base et le cœur de réseau, une station de base devient inopérante. Il en est de même lorsque la liaison de collecte est significativement dégradée en termes de débit, par exemple du fait d'un incident réseau, d'une catastrophe naturelle, voire d'un attentat.

Il est cependant souhaitable qu'une station de base dont la liaison de collecte est dégradée et/ou limitée en termes de débit continue à fournir un service de communication locale entre des utilisateurs qui sont sous sa couverture, ou à une partie d'entre eux, par exemple des services de sécurité civile, ou des utilisateurs d'une même entreprise qui seraient bloqués dans un bâtiment.

Dans un mode de fonctionnement classique, le système EPS n'offre pas cette possibilité car la communication entre deux terminaux mobiles, qu'ils soient servis par la même station de base ou par des stations de base différentes, repose sur des flux qui transitent nécessairement par l'interface Sl-U, jusqu'à une passerelle de service S-GW ou une passerelle de paquets P-GW.

La spécification TS 23.401 version 13.4.0 décrit dans son annexe K le fonctionnement du réseau en mode isolé. Connu sous l'acronyme « IOPS » (pour « Isolated E-UTRAN Operation for Public Safety »), ce fonctionnement permet des communications entre les membres d'une équipe de secours qui sont sous couverture d'une station de base donnée. Un réseau cœur local (ou « Local EPC »,), qui inclut une entité de gestion de la mobilité MME, une passerelle de service S-GW, une passerelle de paquets P-GW et un serveur d'abonnés « HSS » (pour « Home Subscriber Server ») est ainsi co-localisé sur un site avec la station de base. Cela présente l'avantage qu'aucun flux de données ni de signalisation entre le site de la station de base et le reste du réseau ne circule. Cette solution nécessite cependant de configurer à l'avance, dans le serveur d'abonnés HSS co-localisé, des données d'authentification et de souscription (on parle de « credentials » en anglais) pour les utilisateurs sous couverture de la station de base pour lesquels on souhaite autoriser des communications. Cela limite l'utilisation de la station de base à un groupe d'utilisateurs défini à l'avance.

Le document « Authentication for IOPS », 3GPP draft, S3-151902, 19 août 2015, XP051014633, propose une solution pour l'authentification dans ce cadre.

Une autre fonctionnalité connue du réseau, appelée SIPTO@LN (pour « Selected IP Traffic Offload at the Local Network »), et décrite dans la spécification 3GPP TS 23.401 version v12.0.0 permet l'acheminement direct d'un flux entre utilisateurs sous couverture de la même station de base, sans passer par le réseau de collecte. Cette fonctionnalité a été prévue pour décharger partiellement le cœur de réseau mobile du trafic Internet en distribuant à la périphérie du réseau une fonction de passerelle vers le réseau Internet. A cette fin la passerelle de service S-GW et la passerelle de paquets P-GW sont remplacées par une passerelle locale notée L-GW qui offre les fonctionnalités de ces deux passerelles et qui est co-localisée avec la station de base. Le trafic n'a donc pas nécessairement besoin d'être acheminé jusqu'au réseau cœur via la liaison de collecte. Cependant, des échanges de signalisation entre la station de base et l'entité de gestion de la mobilité MME sont toujours nécessaires et doivent alors emprunter le réseau de collecte.

Ainsi, il n'est actuellement pas possible, en cas d'incident impactant la liaison de collecte entre la station de base et le reste du réseau, d'offrir un service d'accès au réseau à des utilisateurs qui arriveraient dans une zone géographique située sous couverture de cette station de base afin de permettre à ces utilisateurs de communiquer entre eux. Un utilisateur est ici un abonné au réseau ou un abonné d'un autre réseau pour lequel des accords d'itinérance ont été conclus. Cela permettrait par exemple de fournir une connectivité réseau à une équipe de secouristes d'un pays étranger, ou d'offrir des services essentiels à l'ensemble des utilisateurs situés sous couverture de la station de base, par exemple l'accès à une page web fournissant des informations sur l'organisation des secours le cas échéant.

Un des buts de l'invention est de remédier à des insuffisances/inconvénients de l'état de la technique et/ou d'y apporter des améliorations.

A cette fin, l'invention propose un procédé d'enregistrement d'un terminal mobile dans un réseau mobile de communication via une station de base, colocalisée avec une entité de gestion locale de la mobilité dans un nœud réseau, une liaison d'accès entre le nœud réseau et le cœur de réseau étant passée d'un mode de fonctionnement normal à un mode de fonctionnement dégradé, le procédé, mis en œuvre par une entité de gestion locale de la mobilité, comprenant :
- une étape de réception d'une requête d'attachement, retransmise par la station de base et en provenance du terminal mobile, ladite requête comprenant un identifiant du terminal mobile,
- une étape d'envoi, à une entité mandataire de gestion de la mobilité jouant un rôle d'intermédiaire entre le nœud réseau et le cœur de réseau, d'une demande d'informations de sécurité propres au terminal mobile, ladite requête comprenant l'identifiant du terminal mobile,
- une étape de réception d'une réponse à la demande d'informations de sécurité, ladite réponse comprenant des informations de sécurité propres audit terminal mobile, lesdites informations de sécurité provenant d'un serveur d'abonnés du réseau,
- une étape d'authentification dudit terminal au moyen des informations de sécurité reçues.

Le procédé décrit ici permet d'offrir un service de connectivité dans le réseau mobile suite à un incident en s'appuyant sur un lien de débit très faible entre le site de la station de base et le reste du réseau. L'incident peut survenir suite à une catastrophe naturelle, un attentat, etc.

Ainsi il est possible, de fournir un service d'accès au réseau mobile entre des utilisateurs de terminaux mobiles qui sont sous couverture d'une station de base partiellement isolée, ou à une partie d'entre eux. A cette fin, il n'est pas nécessaire que les utilisateurs susceptibles d'accéder au réseau via la station de base soient connus et préalablement enregistrés au niveau d'un serveur d'abonnés HSS dédié. En effet, l'authentification de l'utilisateur, mise en œuvre au plus proche du terminal, c'est-à-dire au niveau de l'entité de gestion locale de la mobilité, repose sur des données d'authentification obtenues du serveur d'abonnés HSS du cœur de réseau via le lien limité en débit. Ainsi, il n'y a pas de contrainte telle qu'une connaissance a priori des utilisateurs susceptibles d'accéder au réseau à partir de la station de base.

Par ailleurs, cela permet à l'entité de gestion locale de la mobilité L-MME de dériver des clés cryptographiques destinées à sécuriser les échanges entre le terminal mobile UE et l'entité de gestion locale de la mobilité L-MME. Cela permet de réaliser les échanges de signalisation ultérieurs en local, entre le terminal mobile UE et l'entité de gestion locale de la mobilité L-MME, sans remonter dans le cœur de réseau.

La connexion du terminal mobile au réseau et les données de trafic propres au terminal ne sont ainsi pas remontées au niveau du réseau de collecte via la liaison de secours.

Le procédé permet par exemple, dans le cas où la limitation du débit du lien entre la station de base et le réseau cœur est consécutive à un événement tel qu'une catastrophe naturelle ou un attentat, de garantir une communication entre les utilisateurs qui sont sous couverture de la station de base. Il s'agit par exemple des membres d'équipes de secours dépêchées sur place. En particulier, le procédé permet à une équipe de secours étrangère, dont l'opérateur attitré a conclu des accords d'itinérance avec l'opérateur qui gère la station de base de communiquer avec d'autres équipes présentes également sans procédure préalable particulière. Le procédé permet également de fournir à des personnes qui se trouveraient isolées suite à cet événement l'accès à des pages d'information leur fournissant des recommandations sur la marche à suivre, ou sur l'organisation des secours.

Dans un exemple de réalisation le procédé comprend une étape d'envoi d'une requête de données de souscription à l'entité mandataire de gestion de mobilité, l'envoi de ladite requête étant représentatif d'un enregistrement réussi du terminal mobile au réseau.

Cette étape permet d'informer implicitement l'entité mandataire de gestion de la mobilité que le terminal mobile s'est correctement attaché au réseau. En effet, l'entité mandataire de gestion de la mobilité considère que l'envoi de la demande de données de souscription par l'entité de gestion locale de la mobilité, consécutive à l'enregistrement du terminal mobile au réseau est légitime. A ce stade, le terminal mobile est localisé dans le réseau : il peut être joint et émettre des paquets. En l'occurrence le trafic issu et à destination du terminal mobile est acheminé par la passerelle locale L-GW, co-localisée avec la station de base.

Dans un exemple de réalisation, le procédé comprend en outre une étape d'envoi à l'entité mandataire de gestion de la mobilité d'une requête de vérification d'identité du terminal mobile.

L'entité locale de gestion de la mobilité est ainsi apte à vérifier si le terminal fait partie d'une liste de terminaux volés.

L'invention concerne également un procédé d'enregistrement d'un terminal mobile dans un réseau mobile de communication via une station de base, colocalisée avec une entité de gestion locale de la mobilité dans un nœud réseau, une liaison d'accès entre le nœud réseau et le cœur de réseau étant passée d'un mode de fonctionnement normal à un mode de fonctionnement dégradé, le procédé, mis en œuvre par une entité mandataire de gestion de la mobilité jouant un rôle d'intermédiaire entre le nœud réseau et le cœur de réseau comprenant :
- une étape de réception, en provenance de l'entité de gestion locale de la mobilité, d'une demande d'informations de sécurité, ladite demande comprenant un identifiant du terminal mobile,
- une étape d'envoi d'une requête d'authentification à un serveur d'abonnés du réseau, ladite requête comprenant l'identifiant du terminal mobile,
- une étape de réception d'une réponse d'authentification, ladite réponse comprenant des informations de sécurité propres au terminal mobile,
- une étape d'envoi à l'entité gestion locale de la mobilité d'une réponse à la demande d'informations de sécurité, ladite réponse comprenant les informations de sécurité reçues.

Dans un exemple de réalisation, le procédé ci-dessus comprend également :
- une étape de réception d'une requête de données de souscription en provenance de l'entité de gestion locale de la mobilité, la réception de ladite requête étant représentative d'un enregistrement réussi du terminal mobile dans le réseau et déclenchant une mise à jour d'informations de localisation dans le serveur d'abonnés,
- une étape d'envoi d'une réponse à la requête, ladite réponse comprenant des données de souscription propres au terminal mobile.

L'invention porte également sur une entité de gestion locale de la mobilité d'un réseau mobile de communication, colocalisée avec une entité de gestion locale de la mobilité dans un nœud réseau, agencée pour gérer la mobilité lorsqu'une liaison d'accès entre le nœud réseau et le cœur de réseau est passée d'un mode de fonctionnement normal à un mode de fonctionnement dégradé, ladite entité comprenant :
- un module de réception de requêtes d'attachement, agencé pour recevoir en provenance d'un terminal mobile via la station de base une requête d'attachement au réseau, ladite requête d'attachement comprenant un identifiant du terminal mobile,
- un module d'envoi de demandes d'informations, agencé pour envoyer à une entité mandataire de gestion de la mobilité jouant un rôle d'intermédiaire entre le nœud réseau et le cœur de réseau une demande d'informations de sécurité propres au terminal mobile, ladite requête comprenant l'identifiant du terminal mobile,
- un module de réception de réponses, agencé pour recevoir de l'entité mandataire de gestion de la mobilité une réponse à la demande d'informations de sécurité, ladite réponse comprenant des informations de sécurité propres audit terminal mobile,
- un module d'authentification, agencé pour authentifier le terminal au moyen des informations de sécurité reçues.

L'invention concerne aussi une entité mandataire de gestion de la mobilité d'un réseau mobile de communication, agencée pour jouer un rôle d'intermédiaire entre le nœud réseau et le cœur de réseau lorsqu'une liaison d'accès entre le nœud réseau et le cœur de réseau est passée d'un mode de fonctionnement normal à un mode de fonctionnement dégradé, ladite entité comprenant :
- un module de réception de demandes d'informations de sécurité, agencé pour recevoir en provenance d'une entité de gestion locale de la mobilité, une demande d'informations de sécurité, ladite demande comprenant un identifiant du terminal mobile,
- un module d'envoi d'une requête d'authentification, agencé pour envoyer à un serveur d'abonnés une requête d'authentification, ladite requête comprenant l'identifiant du terminal mobile,
- un module de réception d'une réponse d'authentification, agencé pour recevoir une réponse à la requête d'authentification, ladite réponse comprenant des informations de sécurité propres au terminal mobile,
- un module d'envoi d'informations de sécurité, agencé pour envoyer à l'entité de gestion locale de la mobilité une réponse à la demande d'informations de sécurité, ladite réponse comprenant les informations de sécurité propres au terminal mobile.

L'invention concerne aussi un système d'enregistrement d'un terminal mobile à un réseau mobile de communication, comprenant :
- un nœud réseau comprenant une station de base, agencée pour gérer des échanges radio avec le terminal mobile, une passerelle locale, agencée pour fournir des fonctionnalités d'une passerelle de service et d'une passerelle de paquets du réseau, et une entité de gestion locale de la mobilité telle que décrite précédemment, et
- une entité mandataire de gestion de la mobilité telle que décrite précédemment.

L'invention concerne aussi un programme d'ordinateur sur un support de données et chargeable dans la mémoire d'une entité de gestion locale de la mobilité, le programme comprenant des portions de code pour l'exécution des étapes du procédé d'enregistrement d'un terminal mobile dans un réseau tel que décrit précédemment, lorsque le programme est exécuté sur ladite entité.

L'invention porte également sur un support de données dans lequel est enregistré le programme ci-dessus.

L'invention porte également sur un programme d'ordinateur sur un support de données et chargeable dans la mémoire d'une entité mandataire de gestion de la mobilité, le programme comprenant des portions de code pour l'exécution des étapes du procédé d'enregistrement d'un terminal mobile dans un réseau tel que décrit précédemment, lorsque le programme est exécuté sur ladite entité.

L'invention concerne aussi un support de données dans lequel est enregistré le programme ci-dessus.

D'autres caractéristiques et avantages de la présente invention seront mieux compris de la description et des dessins annexés parmi lesquels :
- la figure 1 est une représentation schématique d'une architecture réseau, selon un exemple de réalisation ;
- la figure 2 présente les étapes d'un procédé d'enregistrement d'un terminal mobile dans un réseau mobile de communication, selon un exemple de réalisation ;
- la figure 3 est une représentation schématique d'une entité de gestion locale de la mobilité, selon un exemple de réalisation ;
- la figure 4 est une représentation schématique d'une entité mandataire de gestion de la mobilité, selon un exemple de réalisation.

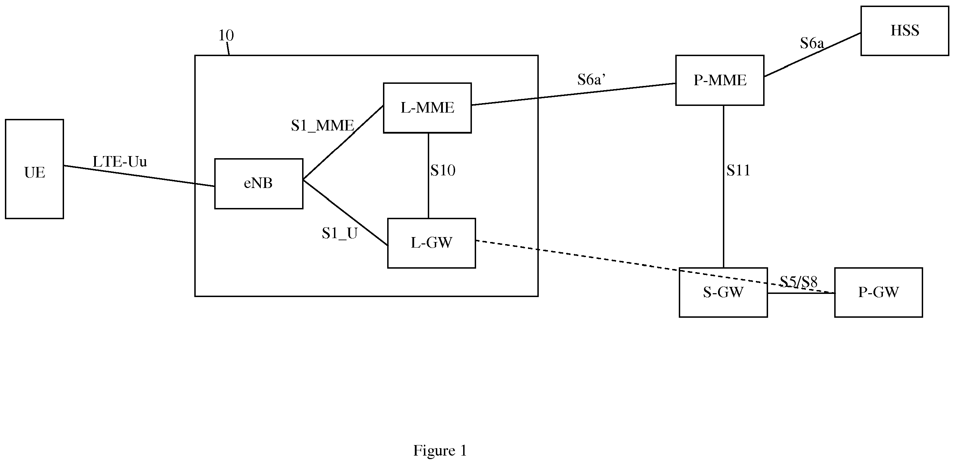

Une représentation schématique d'une architecture réseau, adaptée pour mettre en œuvre le procédé d'enregistrement d'un terminal mobile dans un réseau, selon un exemple de réalisation va maintenant être décrite en relation avec la figure 1.

L'architecture et le procédé sont illustrés ici dans un réseau de type « EPS » (pour « Evolved Packet System »). L'invention n'est cependant pas limitée à ce type de réseau et s'applique également à d'autres types de réseaux mobiles tels que par exemple le réseau « GPRS » (de l'anglais « General Packet Radio Service »).

Un nœud réseau 10 assure les fonctionnalités habituelles de plusieurs entités du réseau. Dans cet exemple, le nœud réseau 10 comprend une station de base eNB partiellement isolée du réseau, une passerelle locale L-GW et une entité de gestion locale de la mobilité L-MME. La station de base eNB est agencée pour gérer la transmission et la réception radio avec un terminal mobile UE via une interface LTE-Uu telle que décrite dans les spécifications 3GPP. Le terminal mobile UE est par exemple un smartphone, un téléphone portable, une tablette, etc. La passerelle locale L-GW fournit les fonctionnalités habituelles d'une passerelle de service S-GW (pour « Serving Gateway ») agencée pour router des paquets et d'une passerelle de paquets P-GW (pour « Packet Data Network Gateway ») agencée pour fournir une connectivité vers des réseaux externes. L'entité de gestion locale de la mobilité L-MME assure les fonctions habituelles de contrôle d'une entité de gestion de la mobilité « MME » (« Mobility Management Entity »). La station de base eNB communique avec l'entité de gestion locale de la mobilité L-MME via une interface SI-MME, et avec la passerelle locale L-GW via une interface S1-U. Les fonctions des entités réseau S-GW, P-GW et MME et les interfaces SI-MME et S1-U sont détaillées dans la spécification TS 23.401. La station de base eNB est dite «partiellement isolée » dans le sens où elle dispose de capacités en local du fait de la présence de la passerelle locale L-GW et de l'entité de gestion locale de la mobilité L-MME mais pour autant, aucun flux de données utilisateur, ou uniquement des flux issus d'utilisateurs sélectionnés, ne transite de la station de base eNB vers le cœur de réseau.

On suppose qu'un lien de débit très faible est configuré entre le site de la station de base eNB, en l'espèce le nœud réseau 10, et le reste du réseau. Plus précisément, la station de base eNB, qui a détecté une dégradation ou une coupure du lien de collecte avec le reste du réseau, est passée en mode de fonctionnement partiellement isolé, ou dégradé, conformément à l'architecture décrite en relation avec la figure 1. Par exemple une coupure de la liaison entre la station de base eNB et le reste du réseau de collecte est survenue et une liaison de secours à débit limité a été automatiquement mise en place par la station de base eNB entre le nœud réseau 10 et le reste du réseau selon une méthode connue. Par exemple, une liaison satellite a été établie. A noter que dans le cas d'une liaison satellite, le débit a pu être sciemment limité afin de maîtriser le coût de cette liaison.

Le nœud réseau 10 co-localise ainsi sur un même site la station de base eNB et des équipements aptes à délivrer certaines fonctionnalités habituellement dispensées par des entités distantes situées dans le cœur de réseau. Dans un premier exemple de réalisation la station de base eNB embarque et met en œuvre l'ensemble de ces fonctionnalités. Dans un autre exemple de réalisation, des équipements distincts fournissent les fonctionnalités de passerelle locale L-GW et de gestion locale de la mobilité L-MME et communiquent avec la station de base eNB au moyen de liaisons spécialisées. Ce dernier exemple permet à plusieurs stations de base de partager le cas échéant des équipements de type passerelle locale L-GW et entité de gestion locale de la mobilité L-MME.

L'entité locale de gestion de la mobilité L-MME est connectée via le lien de secours ou à débit limité à un équipement mandataire de gestion de la mobilité, appelé proxy MME, ou P-MME. Cet équipement mandataire P-MME joue le rôle d'équipement intermédiaire entre le nœud réseau 10 et le reste du réseau. Une nouvelle interface S6a' est ainsi définie entre l'équipement local de gestion de la mobilité L-MME et l'équipement mandataire P-MME. Cette nouvelle interface S6a'est basée sur l'interface S6a telle que définie dans la spécification TS 23.401, dans le sens où elle est agencée pour transférer des données d'authentification et de souscription (on parle de « credentials » en anglais) adaptées pour authentifier et autoriser l'accès d'un utilisateur entre le serveur d'abonnés « HSS » (pour « Home Subscriber Server ») du réseau et l'entité locale de gestion de la mobilité L-MME.

Dans un exemple de réalisation, l'équipement mandataire P-MME peut être utilisé par une pluralité d'entités de gestion locale de la mobilité (non représentées sur la figure 1). Par exemple, l'équipement mandataire P-MME peut être utilisé par l'ensemble des nœuds réseau qui se trouvent partiellement isolés après la survenue d'un incident. L'entité mandataire P-MME se connecte au serveur d'abonnés HSS à travers une interface S6a telle que définie dans la spécification TS 23.401 et éventuellement aux autres entités de gestion de la mobilité du réseau MME à travers une interface S10 telle que définie dans la spécification TS 29.274. L'entité mandataire P-MME se connecte également éventuellement à des passerelles « SGSN » (pour « Serving GPRS Support Node ») à travers une interface S3 telle que définie dans la spécification TS 29.274. L'entité mandataire P-MME est ainsi vue du reste du réseau comme une entité classique de gestion de la mobilité MME et les utilisateurs de la station de base eNB partiellement isolée sont vus du reste du réseau comme étant enregistrés au niveau de l'entité mandataire P-MME. La fonctionnalité SIPTO@LN est ainsi utilisée pour acheminer localement les flux de données des utilisateurs.

L'entité mandataire P-MME est connectée à la passerelle de service du réseau S-GW via une interface notée S11. Les passerelles S-GW et P-GW du réseau communiquent à travers une interface notée S5/S8. Les interfaces S10 et S5/S8 sont définies dans les spécifications TS 29.274 et TS 29.281. Dans un exemple de réalisation, il est possible de définir un nom de point d'accès au réseau (ou « APN », pour « Access Point Name ») particulier pour lequel une passerelle de paquets du réseau, ici la passerelle P-GW, est sélectionnée afin de permettre à certains utilisateurs d'accéder à un service complet, c'est-à-dire non limité à des communications locales. Dans ce cas particulier le flux de données issu et à destination de ces utilisateurs transite sur le lien entre le nœud réseau 10 et le cœur de réseau. Cet exemple est illustré sur la figure 1 par le lien en pointillés

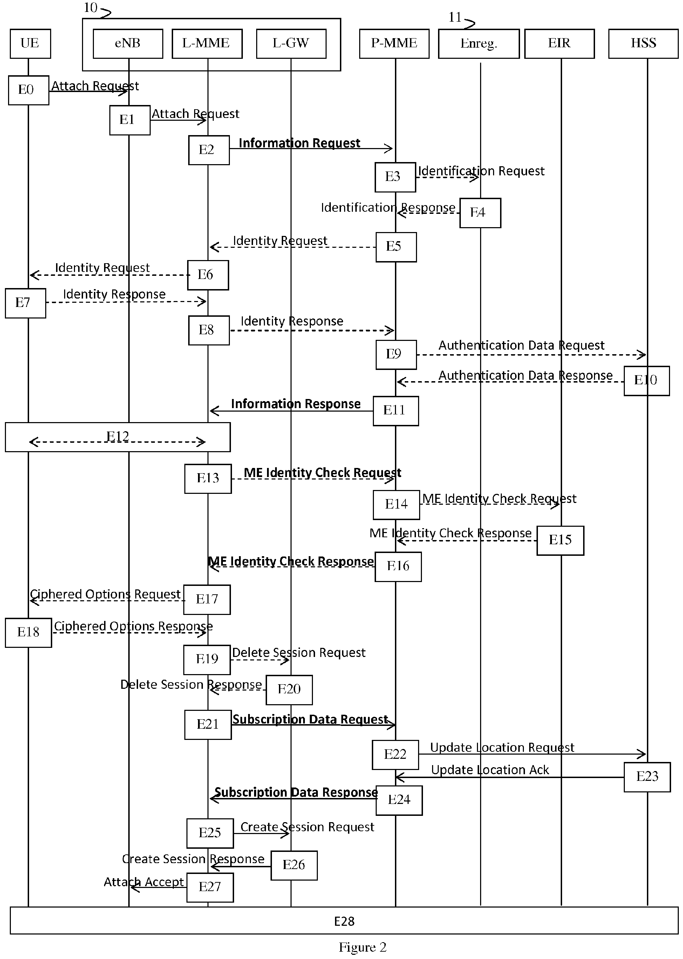

Les étapes d'un procédé d'enregistrement d'un terminal mobile dans un réseau mobile de communication, selon un exemple de réalisation, vont maintenant être décrites, en relation avec la figure 2.

On suppose que la station de base eNB est passée d'un mode de fonctionnement normal à un mode de fonctionnement dégradé et se trouve alors partiellement isolée, suite à un événement tel qu'une catastrophe naturelle ou à un attentat. Une liaison à faible débit existe ainsi entre le site de la station de base eNB et le reste du réseau. Par exemple la liaison existante est dégradée et n'offre plus qu'un débit limité, ou une liaison de secours, telle qu'une liaison satellite, a été établie par la station de base eNB suite à une coupure de liaison et limitée en débit. Conformément à l'architecture décrite en relation avec la figure 1, les fonctionnalités de gestion locale de la mobilité et de passerelle de service et de paquets sont co-localisées avec la station de base eNB et sont rendues par l'entité de gestion locale de la mobilité L-MME et la passerelle locale L-GW.

L'entité mandataire de gestion de la mobilité P-MME fournit les fonctionnalités de contrôle de la mobilité du réseau au nœud réseau partiellement isolé 10. Une entité d'enregistrement du réseau 11, impliquée lors de l'enregistrement précédent du terminal mobile auprès du réseau est agencée pour fournir sur demande des informations sur un contexte propre au terminal mobile et créé lors du précédent enregistrement du terminal dans le réseau. Cette entité d'enregistrement 11 est par exemple une entité de gestion de la mobilité MME, ou une autre entité de gestion locale de la mobilité, ou une passerelle SGSN qui assure des fonctions de gestion de la mobilité dans le cas d'un réseau GPRS.

Dans un exemple de réalisation de l'invention, une entité réseau d'enregistrement d'identités « EIR » (pour « Equipment Identity Register ») est agencée pour mémoriser des informations de sécurité et d'identification relatives à des terminaux mobiles. En particulier, c'est à partir de l'entité EIR qui mémorise des codes « IMEI » (de l'anglais « International Mobile Equipment Identity ») qui identifient de façon unique les terminaux mobiles en tant qu'équipement qu'un opérateur de réseau mobile peut bloquer un terminal mobile volé.

Certains échanges décrits ci-dessous sont conformes à ceux de la procédure d'enregistrement d'un terminal mobile dans un réseau telle que décrite dans la spécification TS 23.401, paragraphe 5.3.2.1. En particulier les messages échangés, lorsqu'ils ont le même nom, ainsi que leurs paramètres, sont identiques à ceux de la spécification. Ils ne sont donc pas décrits dans le détail.

Dans une étape initiale E0, le terminal UE émet une requête d'attachement Attach Request, reçue par la station de base eNB et retransmise dans une étape E1 de retransmission à l'entité de gestion locale de la mobilité L-MME. La requête d'attachement comprend un identifiant du terminal UE. Cet identifiant est soit un identifiant temporaire de type « GUTI » (pour « Globally Unique Temporary Identifier »), soit un identifiant d'abonné ou « IMSI » (pour « International Mobile Subscriber Identity ») stocké dans la carte « USIM » (de l'anglais « Universal Subscriber Identity Module »), ou la carte « UICC » (pour « Universal Integrated Circuit Card ») du terminal mobile UE. Dans l'exemple décrit ici, on suppose que la requête d'attachement Attach Request comprend un identifiant temporaire GUTI. L'identifiant temporaire a été affecté au terminal mobile UE lors d'une précédente demande d'enregistrement du terminal UE dans le réseau par l'entité d'enregistrement du réseau 11 qui est une entité en charge de la gestion de la mobilité dans le réseau.

L'entité locale de gestion de la mobilité L-MME envoie dans une étape E2 une demande d'informations de sécurité, Information Request, propres au terminal UE, à l'entité mandataire de gestion de la mobilité P-MME. Cette requête comprend les paramètres compris dans la requête d'attachement Attach Request, dont l'identifiant temporaire GUTI.

Dans une étape E3, l'entité mandataire de gestion de la mobilité P-MME envoie une requête d'identification, Identification Request, à destination de l'entité d'enregistrement 11 qui a alloué l'identifiant temporaire GUTI au terminal mobile UE lors du précédent enregistrement du terminal UE. L'entité d'enregistrement 11 envoie une réponse d'identification, Identification Response, à l'entité mandataire de gestion de la mobilité P-MME dans une étape E4 de réponse. La réponse d'identification comprend un contexte propre au terminal mobile UE qui comprend l'identifiant unique d'abonné IMSI auquel a été associé l'identifiant temporaire GUTI, ainsi que des informations de sécurité.

Dans un cas où l'étape précédente a échoué, c'est-à-dire dans le cas où le terminal mobile UE était inconnu de l'entité d'enregistrement 11, l'entité mandataire de gestion de la mobilité P-MME envoie à l'entité de gestion locale de la mobilité L-MME, dans une étape E5 d'envoi, une requête d'identité, Identity Request. Cette requête est retransmise par l'entité de gestion locale de la mobilité L-MME au terminal mobile UE dans une étape E6. Cette requête est destinée à obtenir du terminal mobile UE l'identifiant unique IMSI d'abonné. Le terminal mobile UE répond à cette requête dans une étape E7, en envoyant une réponse à la requête d'identité, Identity Response, qui comprend l'IMSI. Cette réponse est transmise par l'entité de gestion locale de la mobilité L-MME à l'entité mandataire P-MME dans une étape E9 d'envoi. Les étapes E5, E6, E7 et E8 étant optionnelles puisqu'exécutées uniquement lorsque le terminal mobile UE est inconnu de l'entité d'enregistrement 11, elles apparaissent en pointillés sur la figure 2.

A ce stade, l'entité mandataire de gestion de la mobilité P-MME possède l'identifiant unique IMSI d'abonné associé au terminal mobile UE.

Dans une étape suivante E9 d'envoi, l'entité mandataire P-MME envoie une requête de données d'authentification, Authentication Data Request, au serveur d'abonnés HSS. La requête d'identité comprend l'identifiant IMSI du terminal UE.

Le serveur d'abonnés HSS répond à la requête en envoyant dans une étape E10 de réponse les données d'authentification du terminal UE dans un message Authentication Data Response. De telles données comprennent un ou plusieurs vecteur(s) d'authentification.

Les étapes E9 et E10 peuvent ne pas être exécutées. C'est le cas lorsque l'entité d'enregistrement a fourni un ou plusieurs vecteurs d'authentification affecté(s) lors du précédent enregistrement, en réponse à la requête d'identification envoyée au cours de l'étape E3.

Dans une étape E11 de réponse, l'entité mandataire de gestion de la sécurité P-MME répond à la demande d'informations envoyées par l'entité de gestion locale de la mobilité L-MME au cours de l'étape E2 dans un message de réponse, Information Response. Le message comprend un contexte propre au terminal UE qui comprend l'identifiant unique d'abonné IMSI et les informations de sécurité reçues du serveur d'abonnés HSS au cours de l'étape précédente, ou de l'entité d'enregistrement 11 au cours de l'étape E4.

Dans une étape E12 d'authentification, l'entité de gestion locale de la mobilité L-MME authentifie le terminal mobile UE au moyen des informations de sécurité du contexte et met en place une association de sécurité telle que définie dans la spécification TS 33.401. L'entité de gestion locale de la mobilité L-MME peut récupérer, après avoir authentifié le terminal UE et au cours d'un échange de messages non représenté l'identifiant unique IMEI du terminal mobile en tant que dispositif.

On note que les messages de demande d'informations, Information Request, et la réponse, Information Response, envoyés respectivement au cours des étapes E2 et E11 sont des messages qui ne figurent pas dans la procédure d'enregistrement décrite dans la spécification TS 23.401. Ces deux messages permettent à l'entité de gestion locale de la mobilité L-MME d'authentifier le terminal mobile. Ainsi, des données de connexion du terminal mobile UE n'ont pas besoin d'être acheminées jusqu'à l'entité mandataire de gestion de la mobilité P-MME en empruntant la liaison à faible débit afin que cette entité authentifie le terminal UE, comme c'est le cas dans la spécification. L'authentification est ainsi réalisée au plus proche du terminal UE et localement dans le sens où l'authentification est exécutée au niveau du nœud réseau 10. Par ailleurs, cela permet à l'entité de gestion locale de la mobilité L-MME de dériver des clés cryptographiques destinées à sécuriser les échanges entre le terminal mobile UE et l'entité de gestion locale de la mobilité L-MME. Cela permet de réaliser les échanges de signalisation ultérieurs en local, entre le terminal mobile UE et l'entité de gestion locale de la mobilité L-MME, sans remonter dans le cœur de réseau.

Dans un exemple de réalisation, dans une étape suivante E13 d'envoi, l'entité de gestion locale de la mobilité L-MME envoie une requête de vérification d'identité, ME Identity Check Request, à l'entité mandataire P-MME. Cette requête est destinée à vérifier si l'identifiant unique du terminal IMEI figure dans une base de données de terminaux volés. La requête comprend l'identifiant unique IMEI du terminal UE obtenu dans cet exemple après l'authentification du terminal UE. L'entité mandataire P-MME transmet, dans une étape E14 la requête à l'entité d'enregistrement d'identités EIR. Dans une étape suivante E15 de réponse, l'entité d'enregistrement d'identités EIR envoie un message de réponse, ME Identity Check Response, indiquant si l'identifiant IMEI du terminal UE appartient à la base des terminaux volés ou non. L'entité mandataire de gestion de la mobilité P-MME transmet la réponse à l'entité de gestion locale L-MME dans une étape E16 de réponse.

Ainsi, l'entité de gestion locale de la mobilité L-MME est apte à vérifier si le terminal fait partie des terminaux volés.

Dans une étape suivante E17 d'envoi, l'entité de gestion locale de la mobilité L-MME envoie au terminal mobile UE une requête de demande d'options chiffrées, Ciphered Options Request, dans le cas où le terminal mobile UE avait précisé lors de l'envoi du message de requête d'attachement au cours de l'étape E0, un besoin de transmettre des options après l'établissement du chiffrement entre le terminal mobile UE et l'entité de gestion locale de la mobilité L-MME. Le terminal UE envoie une réponse dans une étape E18 de réponse, Ciphered Options Response, qui comprend lesdites options, par exemple « PCO » (pour « Protocol Configuration Options ») ou « APN ».

Dans une étape suivante E19 de suppression, exécutée dans un cas où il resterait un contexte de lien logique (on parle de « bearer context » en anglais) actif propre au terminal mobile UE au niveau de l'entité de gestion locale de la mobilité L-MME, l'entité de gestion locale L-MME le supprime en envoyant une requête de suppression, Delete Session Request, à la passerelle locale L-GW impliquée. La passerelle L-GW supprime le contexte actif du terminal UE et envoie en réponse, dans une étape E20 de réponse, un message, Delete Session Response, à l'entité de gestion locale L-MME.

Dans une étape suivante E21 de demande de données de souscription, l'entité de gestion locale de la mobilité L-MME envoie une requête de demande de données de souscription, Subscription Data Request, à l'entité mandataire P-MME. Ce message est destiné à indiquer à l'entité mandataire P-MME que l'enregistrement du terminal UE au réseau a abouti, et notamment que l'authentification du terminal auprès de l'entité de gestion locale de la mobilité L-MME s'est bien passée.

Cela déclenche dans une étape E22, l'envoi par l'entité mandataire de gestion de la mobilité P-MME d'un message de mise à jour de la localisation Update Location Request au serveur d'abonnés HSS. A noter que cette étape n'est pas exécutée si le terminal UE était précédemment enregistré auprès de cette même entité mandataire P-MME.

Dans une étape suivante E23 de réponse, le serveur d'abonnés HSS enregistre l'entité mandataire de gestion de la mobilité P-MME comme étant celle qui est associée au terminal mobile UE et envoie un message de réponse, Update Location Ack, qui contient les données de souscription associées au terminal mobile UE.

Dans une étape suivante E24 de transmission, l'entité mandataire de gestion de la mobilité P-MME envoie à l'entité de gestion locale de la mobilité L-MME les données de souscription du terminal, obtenues du serveur d'abonnés HSS ou déjà mémorisées dans l'entité mandataire P-MME.

Dans une étape E25 de création, l'entité de gestion locale L-MME envoie un message de création d'un lien logique, Create Session Request, à la passerelle L-GW co-localisée avec l'entité L-MME afin de créer un lien logique (« default bearer » en anglais) pour le terminal mobile UE.

Dans une étape E26 de création et d'envoi, la passerelle L-GW exécute les opérations habituellement exécutées par les passerelles de services S-GW et de paquets P-DN du réseau pour la création du lien logique. La passerelle L-GW envoie, dans une étape E26 de réponse, un message de réponse, Create Session Response, à l'entité de gestion locale de la mobilité L-MME qui comprend une adresse IP ou un préfixe IP alloué(e) au terminal mobile UE.

Dans une étape suivante E27 d'envoi, l'entité de gestion locale de la mobilité L-MME envoie à la station de base eNB un message, Attach Accept, représentatif d'un enregistrement effectif du terminal mobile UE dans le réseau. Le message comprend l'identifiant temporaire GUTI alloué par l'entité de gestion locale de la mobilité L-MME ainsi que l'adresse IP ou le préfixe IP alloué(e) par la passerelle L-GW.

La procédure d'enregistrement se poursuit ensuite, conformément aux étapes 18 à 26 de la procédure d'enregistrement décrite dans la spécification TS 23.401, l'entité de gestion locale de la mobilité L-MME jouant alors de le rôle de l'entité de gestion de la mobilité MME et la passerelle locale L-GW jouant les rôles des passerelles S-GW et P-GW du réseau. L'exécution de ces étapes de la procédure d'enregistrement est représentée sur la figure par l'étape E28.

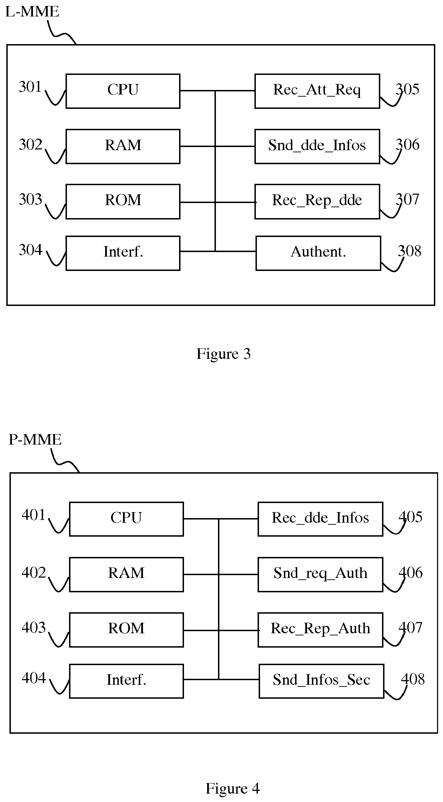

Une entité de gestion locale de la mobilité, selon un exemple de réalisation, va maintenant être décrite en relation avec la figure 3.

Une entité de gestion locale de la mobilité L-MME, au même titre qu'une entité de gestion de la mobilité MME, est une entité réseau en charge du contrôle dans une partie d'un réseau de communication mobile. Plus précisément l'entité de gestion locale de la mobilité L-MME est associée à une ou plusieurs stations de base qui sont passées dans un mode de fonctionnement dégradé. L'entité de gestion locale de la mobilité L-MME est responsable de l'enregistrement des terminaux mobiles sous couverture réseau de la station de base eNB, de leur authentification et de leur joignabilité.

L'entité de gestion locale de la mobilité L-MME est un serveur informatique comprenant :
- une unité de traitement ou processeur 301, ou "CPU" (de l'anglais "Central Processing Unit"), destinée à charger des instructions en mémoire, à les exécuter, à effectuer des opérations ;
- un ensemble de mémoires, dont une mémoire volatile 302, ou "RAM" (pour "Random Access Memory") utilisée pour exécuter des instructions de code, stocker des variables, etc., et une mémoire de stockage 303 de type « EEPROM » (de l'anglais « Electrically Erasable Programmable Read Only Memory »). En particulier, la mémoire de stockage 303 est agencée pour mémoriser un module logiciel comprenant des instructions de code pour mettre en œuvre celles des étapes du procédé d'enregistrement d'un terminal dans un réseau tel que décrit précédemment qui sont exécutées par l'entité de gestion locale de la mobilité L-MME.

L'entité de gestion locale de la mobilité L-MME comprend également :
- un ensemble 304 d'interfaces, agencées pour communiquer avec la station de base eNB, avec la passerelle locale L-GW et avec l'entité mandataire de gestion de la mobilité P-MME. Plus précisément, l'interface avec la station de base eNB est conforme à une interface S1-MME et l'interface avec la passerelle locale L-GW est conforme à une interface S10. Les interfaces S1-MME et S10 sont décrites dans les spécifications TS 23.401 et TS 29.274. Une nouvelle interface, notée S6a' est définie entre l'entité de gestion locale de la mobilité L-MME et l'entité mandataire de gestion de la mobilité P-MME. Cette nouvelle interface S6a'est basée sur l'interface S6a telle que définie dans la spécification TS 29.272, dans le sens où elle est agencée pour transférer des données d'authentification et de souscription adaptées pour authentifier et autoriser l'accès d'un utilisateur entre le serveur d'abonnés HSS du réseau et l'entité locale de gestion de la mobilité L-MME ;
- un module 305 de réception de requêtes d'attachement, agencé pour recevoir une requête d'attachement au réseau, en provenance du terminal mobile UE. Le module 305 est agencé pour mettre en œuvre l'étape E0 du procédé d'enregistrement d'un terminal mobile tel que décrit précédemment ;

- un module 306 d'envoi de demandes d'informations, agencé pour envoyer à un équipement mandataire de gestion de la mobilité P-MME une demande d'informations de sécurité propres au terminal mobile, ladite requête comprenant un identifiant du terminal mobile. Le module 306 est agencé pour mettre en œuvre l'étape E2 du procédé d'enregistrement d'un terminal mobile tel que décrit précédemment ;
- un module 307 de réception de réponses, agencé pour recevoir de l'équipement mandataire de gestion de la mobilité une réponse à la demande d'informations de sécurité, ladite réponse comprenant des informations de sécurité propres audit terminal mobile. Le module 307 est agencé pour mettre en œuvre l'étape E11 du procédé d'enregistrement d'un terminal mobile décrit précédemment ;
- un module 308 d'authentification, agencé pour authentifier le terminal mobile au moyen des informations de sécurité reçues. Le module 308 d'authentification est agencé pour mettre en œuvre l'étape E12 du procédé d'enregistrement tel que décrit précédemment.

L'ensemble d'interfaces 304, le module 305 de réception de requêtes d'attachement, le module 306 d'envoi de demandes d'informations, le module 307 de réception de réponses et le module 308 d'authentification sont de préférence des modules logiciels comprenant des instructions logicielles pour mettre en œuvre les étapes du procédé d'enregistrement d'un terminal mobile dans le réseau qui sont exécutées par l'entité de gestion locale de la mobilité L-MME.

L'invention concerne donc aussi :
- un programme d'ordinateur comportant des instructions pour la mise en œuvre du procédé d'enregistrement d'un terminal mobile tel que décrit précédemment lorsque ce programme est exécuté par un processeur de l'entité de gestion locale de la mobilité L-MME, et
- un support d'enregistrement lisible sur lequel est enregistré le programme d'ordinateur décrit ci-dessus.

Une entité mandataire de gestion de la mobilité, selon un exemple de réalisation, va maintenant être décrite en relation avec la figure 4.

L'entité mandataire de gestion de la mobilité P-MME est un équipement intermédiaire entre le nœud réseau 10 qui comprend la station de base eNB, l'entité de gestion locale de la mobilité L-MME et la passerelle locale L-GW, et le cœur de réseau.

L'entité mandataire de gestion de la mobilité P-MME est un serveur informatique qui comprend :
- un processeur 401, destiné à charger des instructions en mémoire, à les exécuter, à effectuer des opérations ;
- un ensemble de mémoires, dont une mémoire volatile 402, utilisée pour exécuter des instructions de code, stocker des variables, etc., et une mémoire de stockage 403 de type EEPROM. En particulier, la mémoire de stockage 403 est agencée pour mémoriser un module logiciel comprenant des instructions de code pour mettre en œuvre celles des étapes du procédé d'enregistrement d'un terminal mobile dans un réseau tel que décrit précédemment qui sont exécutées par l'entité mandataire de gestion de la mobilité P-MME ;

L'entité mandataire de gestion de la mobilité P-MME comprend également :
- un ensemble d'interfaces 404, adaptées pour communiquer avec l'entité de gestion locale de la mobilité L-MME et un serveur d'abonnés HSS du réseau. Plus précisément, une nouvelle interface S6a' est définie entre l'entité de gestion locale de la mobilité L-MME et l'entité mandataire de gestion de la mobilité P-MME. L'interface de communication avec le serveur d'abonnés HSS est conforme à une interface S6a telle que décrite dans la spécification TS 29.272.
- un module 405 de réception de demandes d'informations de sécurité, agencé pour recevoir en provenance de l'entité de gestion locale de la mobilité L-MME, une demande d'informations de sécurité, ladite demande comprenant un identifiant du terminal mobile,
- un module 406 d'envoi de requêtes d'authentification, agencé pour envoyer au serveur d'abonnés HSS une requête d'authentification, ladite requête comprenant l'identifiant du terminal mobile. Le module 406 est agencé pour mettre en œuvre l'étape E9 du procédé d'enregistrement tel que décrit précédemment ;
- un module 407 de réception de réponses d'authentification, agencé pour recevoir une réponse à la requête d'authentification, ladite réponse comprenant des informations de sécurité propres au terminal mobile. Le module 407 est agencé pour mettre en œuvre l'étape E11 du procédé d'enregistrement tel que décrit précédemment ;
- un module 408 d'envoi d'informations de sécurité, agencé pour envoyer à l'entité de gestion locale de la mobilité une réponse à la demande d'informations de sécurité, ladite réponse comprenant les informations de sécurité propres au terminal mobile. Le module 408 est agencé pour mettre en œuvre l'étape E11 du procédé d'enregistrement tel que décrit précédemment ;

L'ensemble d'interfaces 404, le module 405 de réception de demandes d'informations de sécurité, le module 406 d'envoi de requêtes d'authentification, le module 407 de réception de réponses d'authentification et le module 408 d'envoi d'informations de sécurité sont de préférence des modules logiciels comprenant des instructions logicielles pour mettre en œuvre les étapes du procédé d'enregistrement d'un terminal mobile au réseau qui sont exécutées par l'entité mandataire de gestion de la mobilité P-MME.

L'invention concerne donc aussi :
- un programme d'ordinateur comportant des instructions pour la mise en œuvre du procédé d'enregistrement d'un terminal mobile tel que décrit précédemment lorsque ce programme est exécuté par un processeur de l'entité mandataire de gestion de la mobilité P-MME, et
- un support d'enregistrement lisible sur lequel est enregistré le programme d'ordinateur décrit ci-dessus.

L'invention porte également sur un système d'enregistrement d'un terminal mobile UE dans réseau mobile, adapté pour enregistrer le terminal mobile UE dans un cas où la station de base eNB à laquelle le terminal mobile accède est passée d'un mode de fonctionnement normal à un mode de fonctionnement dégradé. La liaison établie avec le réseau cœur est limitée en ce sens qu'elle ne permet pas l'acheminement de paquets en provenance et à destination du terminal et limite les échanges de messages de signalisation à ceux relatifs à l'authentification du terminal. Le système d'enregistrement comprend :
- la station de base eNB, agencée pour gérer des échanges radio avec le terminal mobile UE,
- une passerelle locale L-GW, agencées pour fournir les fonctionnalités d'une passerelle de service S-GW et d'une passerelle de paquets P-GW du réseau,
- une entité de gestion locale de la mobilité L-MME telle que décrite précédemment, et
- une entité mandataire de gestion de la mobilité P-MME telle que décrite précédemment.

## Revendications

1. Procédé d'enregistrement d'un terminal mobile dans un réseau mobile de communication via une station de base, colocalisée avec une entité de gestion locale de la mobilité dans un nœud réseau, une liaison d'accès entre le nœud réseau et le cœur du réseau étant passée d'un mode de fonctionnement normal à un mode de fonctionnement dégradé, le procédé, mis en œuvre par l'entité de gestion locale de la mobilité, comprenant :
- une étape (E1) de réception d'une requête d'attachement, retransmise par la station de base et en provenance du terminal mobile, ladite requête comprenant un identifiant du terminal mobile,
- une étape (E2) d'envoi, à une entité mandataire de gestion de la mobilité jouant un rôle d'intermédiaire entre le nœud réseau et le cœur de réseau, d'une demande d'informations de sécurité propres au terminal mobile, ladite requête comprenant l'identifiant du terminal mobile,
- une étape (E11) de réception d'une réponse à la demande d'informations de sécurité, ladite réponse comprenant des informations de sécurité propres audit terminal mobile, lesdites informations de sécurité provenant d'un serveur d'abonnés du réseau,
- une étape (E12) d'authentification dudit terminal au moyen des informations de sécurité reçues.

2. Procédé selon la revendication 1, comprenant en outre une étape (E21) d'envoi d'une requête de données de souscription à l'entité mandataire de gestion de la mobilité, l'envoi de ladite requête étant représentatif d'un enregistrement réussi du terminal mobile au réseau.

3. Procédé selon la revendication 2, comprenant en outre une étape (E13) d'envoi à l'entité mandataire de gestion de la mobilité d'une requête de vérification d'identité du terminal mobile.

4. Procédé d'enregistrement d'un terminal mobile dans un réseau mobile de
communication via une station de base, colocalisée avec une entité de gestion locale de la mobilité
dans un nœud réseau, une liaison d'accès entre le nœud réseau et le cœur du réseau étant passée d'un mode de fonctionnement normal à un mode de fonctionnement dégradé, le procédé, mis en œuvre par une entité mandataire de gestion de la mobilité jouant un rôle d'intermédiaire entre le nœud réseau et le cœur de réseau comprenant :
- une étape de réception, en provenance de l'entité de gestion locale de la mobilité, d'une demande d'informations de sécurité, ladite demande comprenant un identifiant du terminal mobile,
- une étape (E9) d'envoi d'une requête d'authentification à un serveur d'abonnés du réseau, ladite requête comprenant l'identifiant du terminal mobile,
- une étape (E10) de réception du serveur d'abonnés d'une réponse d'authentification, ladite réponse comprenant des informations de sécurité propres au terminal mobile,
- une étape (E11) d'envoi à l'entité gestion locale de la mobilité d'une réponse à la demande d'informations de sécurité, ladite réponse comprenant les informations de sécurité reçues.

5. Procédé selon la revendication 4, comprenant :
- une étape de réception d'une requête de données de souscription en provenance de l'entité de gestion locale de la mobilité, la réception de ladite requête étant représentative d'un enregistrement réussi du terminal mobile dans le réseau et déclenchant une mise à jour d'informations de localisation dans le serveur d'abonnés,
- une étape d'envoi d'une réponse à la requête de données de souscription, ladite réponse comprenant des données de souscription propres au terminal mobile

6. Entité de gestion locale de la mobilité d'un réseau mobile de communication, colocalisée avec une station de base dans un nœud réseau, agencée pour gérer la mobilité lorsqu'une liaison d'accès entre le nœud réseau et le cœur du réseau est passée d'un mode de fonctionnement normal à un mode de fonctionnement dégradé, ladite entité comprenant :
- un module (305) de réception de requêtes d'attachement, agencé pour recevoir en provenance d'un terminal mobile via la station de base, une requête d'attachement au réseau, ladite requête d'attachement comprenant un identifiant du terminal mobile,
- un module (306) d'envoi de demandes d'informations, agencé pour envoyer à une entité mandataire de gestion de la mobilité jouant un rôle d'intermédiaire entre le nœud réseau et le cœur de réseau, une demande d'informations de sécurité propres au terminal mobile, ladite requête comprenant l'identifiant du terminal mobile,
- un module (307) de réception de réponses, agencé pour recevoir de l'entité mandataire de gestion de la mobilité une réponse à la demande d'informations de sécurité, ladite réponse comprenant des informations de sécurité propres audit terminal mobile, lesdites informations de sécurité provenant d'un serveur d'abonnés du réseau,
- un module d'authentification (308), agencé pour authentifier le terminal au moyen des informations de sécurité reçues.

7. Entité mandataire de gestion de la mobilité d'un réseau mobile de communication, agencée pour jouer un rôle d'intermédiaire entre un nœud réseau et le cœur du réseau lorsqu'une liaison d'accès entre le nœud réseau et le cœur du réseau est passée d'un mode de fonctionnement normal à un mode de fonctionnement dégradé, ladite entité comprenant :
- un module (405) de réception de demandes d'informations de sécurité, agencé pour recevoir en provenance d'une entité de gestion locale de la mobilité colocalisée avec une station de base dans le nœud réseau, une demande d'informations de sécurité, ladite demande comprenant un identifiant du terminal mobile,
- un module (406) d'envoi d'une requête d'authentification, agencé pour envoyer à un serveur d'abonnés une requête d'authentification, ladite requête comprenant l'identifiant du terminal mobile,
- un module (407) de réception d'une réponse d'authentification, agencé pour recevoir une réponse à la requête d'authentification, ladite réponse comprenant des informations de sécurité propres au terminal mobile,
- un module (408) d'envoi d'informations de sécurité, agencé pour envoyer à l'entité de gestion locale de la mobilité une réponse à la demande d'informations de sécurité, ladite réponse comprenant les informations de sécurité propres au terminal mobile.

8. Système d'enregistrement d'un terminal mobile à un réseau mobile de communication, comprenant :
- un nœud réseau comprenant une station de base, agencée pour gérer des échanges radio avec le terminal mobile, une passerelle locale, agencée pour fournir des fonctionnalités d'une passerelle de service et d'une passerelle de paquets du réseau, et une entité de gestion locale de la mobilité selon la revendication 6, et
- une entité mandataire de gestion de la mobilité selon la revendication 7.

9. Programme d'ordinateur sur un support de données et chargeable dans la mémoire d'une entité de gestion locale de la mobilité, le programme comprenant des portions de code pour l'exécution des étapes du procédé d'enregistrement d'un terminal mobile dans un réseau selon l'une quelconque des revendications 1 à 3, lorsque le programme est exécuté sur ladite entité.

10. Support de données dans lequel est enregistré le programme selon la revendication 9.

11. Programme d'ordinateur sur un support de données et chargeable dans la mémoire d'une entité mandataire de gestion de la mobilité, le programme comprenant des portions de code pour l'exécution des étapes du procédé d'enregistrement d'un terminal mobile dans un réseau selon l'une des revendications 4 à 5, lorsque le programme est exécuté sur ladite entité.

12. Support de données dans lequel est enregistré le programme selon la revendication 11.

## Patentansprüche

1. Verfahren zur Registrierung eines mobilen Endgeräts in einem Mobilkommunikationsnetz über eine Basisstation, die mit einer Einheit zur lokalen Verwaltung der Mobilität in einem Netzknoten kolokalisiert ist, wobei eine Zugangsverbindung zwischen dem Netzknoten und dem Kern des Netzes von einem normalen Betriebsmodus zu einem herabgesetzten Betriebsmodus gewechselt hat, wobei das Verfahren, das von der Einheit zur lokalen Verwaltung der Mobilität durchgeführt wird, Folgendes umfasst:
- einen Schritt (E1) des Empfangens einer Anbindungsanfrage, die von der Basisstation weitergeleitet wird und vom mobilen Endgerät stammt, wobei die Anfrage eine Kennung des mobilen Endgeräts umfasst,
- einen Schritt (E2) des Sendens einer Anforderung von Sicherheitsinformationen, die dem mobilen Endgerät eigen sind, an eine Proxy-Einheit zur Verwaltung der Mobilität, die eine Zwischengliedrolle zwischen dem Netzknoten und dem Netzkern spielt, wobei die Anfrage die Kennung des mobilen Endgeräts umfasst,
- einen Schritt (E11) des Empfangens einer Antwort auf die Anforderung von Sicherheitsinformationen, wobei die Antwort Sicherheitsinformationen umfasst, die dem mobilen Endgerät eigen sind, wobei die Sicherheitsinformationen von einem Teilnehmerserver des Netzes stammen,
- einen Schritt (E12) des Authentifizierens des Endgeräts mittels der empfangenen Sicherheitsinformationen.

2. Verfahren nach Anspruch 1, ferner umfassend einen Schritt (E21) des Sendens einer Anfrage von Teilnahmedaten an die Proxy-Einheit zur Verwaltung der Mobilität, wobei das Senden der Anfrage für eine erfolgreiche Registrierung des mobilen Endgeräts im Netz repräsentativ ist.

3. Verfahren nach Anspruch 2, ferner umfassend einen Schritt (E13) des Sendens einer Anfrage zur Identitätsüberprüfung des mobilen Endgeräts an die Proxy-Einheit zur Verwaltung der Mobilität.

4. Verfahren zur Registrierung eines mobilen Endgeräts in einem Mobilkommunikationsnetz über eine Basisstation, die mit einer Einheit zur lokalen Verwaltung der Mobilität in einem Netzknoten kolokalisiert ist, wobei eine Zugangsverbindung zwischen dem Netzknoten und dem Kern des Netzes von einem normalen Betriebsmodus zu einem herabgesetzten Betriebsmodus gewechselt hat, wobei das Verfahren, das von einer Proxy-Einheit zur Verwaltung der Mobilität durchgeführt wird, die eine Zwischengliedrolle zwischen dem Netzknoten und dem Netzkern spielt, Folgendes umfasst:
- einen Schritt des Empfangens einer Anforderung von Sicherheitsinformationen von der Einheit zur lokalen Verwaltung der Mobilität, wobei die Anforderung eine Kennung des mobilen Endgeräts umfasst,
- einen Schritt (E9) des Sendens einer Authentifizierungsanfrage an einen Teilnehmerserver des Netzes, wobei die Anfrage die Kennung des mobilen Endgeräts umfasst,
- einen Schritt (E10) des Empfangens einer Authentifizierungsantwort vom Teilnehmerserver, wobei die Antwort Sicherheitsinformationen umfasst, die dem mobilen Endgerät eigen sind,
- einen Schritt (E11) des Sendens einer Antwort auf die Anforderung von Sicherheitsinformationen an die Einheit zur lokalen Verwaltung der Mobilität, wobei die Antwort die empfangenen Sicherheitsinformationen umfasst.

5. Verfahren nach Anspruch 4, umfassend:
- einen Schritt des Empfangens einer Anfrage von Teilnahmedaten von der Einheit zur lokalen Verwaltung der Mobilität, wobei der Empfang der Anfrage für eine erfolgreiche Registrierung des mobilen Endgeräts im Netz repräsentativ ist und eine Aktualisierung von Lokalisationsinformationen im Teilnehmerserver auslöst,
- einen Schritt des Sendens einer Antwort auf die Anfrage von Teilnahmedaten, wobei die Antwort Teilnahmedaten umfasst, die dem mobilen Endgerät eigen sind.

6. Einheit zur lokalen Verwaltung der Mobilität eines Mobilkommunikationsnetzes, die mit einer Basisstation in einem Netzknoten kolokalisiert ist, die angeordnet ist, die Mobilität zu verwalten, wenn eine Zugangsverbindung zwischen dem Netzknoten und dem Kern des Netzes von einem normalen Betriebsmodus zu einem herabgesetzten Betriebsmodus gewechselt hat, wobei die Einheit Folgendes umfasst:
- ein Modul (305) zum Empfang von Anbindungsanfragen, das angeordnet ist, von einem mobilen Endgerät über die Basisstation eine Anfrage zur Anbindung ans Netz zu empfangen, wobei die Anbindungsanfrage eine Kennung des mobilen Endgeräts umfasst,
- ein Modul (306) zum Senden von Informationsanforderungen, das angeordnet ist, eine Anforderung von Sicherheitsinformationen, die dem mobilen Endgerät eigen sind, an eine Proxy-Einheit zur Verwaltung der Mobilität zu senden, die eine Zwischengliedrolle zwischen dem Netzknoten und dem Netzkern spielt, wobei die Anfrage die Kennung des mobilen Endgeräts umfasst,
- ein Modul (307) zum Empfang von Antworten, das angeordnet ist, von der Proxy-Einheit zur Verwaltung der Mobilität eine Antwort auf die Anforderung von Sicherheitsinformationen zu empfangen, wobei die Antwort Sicherheitsinformationen umfasst, die dem mobilen Endgerät eigen sind, wobei die Sicherheitsinformationen von einem Teilnehmerserver des Netzes stammen,
- ein Authentifizierungsmodul (308), das angeordnet ist, das Endgerät mittels der empfangenen Sicherheitsinformationen zu authentifizieren.

7. Proxy-Einheit zur Verwaltung der Mobilität eines Mobilkommunikationsnetzes, die angeordnet ist, eine Zwischengliedrolle zwischen einem Netzknoten und dem Kern des Netzes zu spielen, wenn eine Zugangsverbindung zwischen dem Netzknoten und dem Kern des Netzes von einem normalen Betriebsmodus zu einem herabgesetzten Betriebsmodus gewechselt hat, wobei die Einheit Folgendes umfasst:
- ein Modul (405) zum Empfang von Anforderungen von Sicherheitsinformationen, das angeordnet ist, von einer Einheit zur lokalen Verwaltung der Mobilität, die mit einer Basisstation im Netzknoten kolokalisiert ist, eine Anforderung von Sicherheitsinformationen zu empfangen, wobei die Anforderung eine Kennung des mobilen Endgeräts umfasst,
- ein Modul (406) zum Senden einer Authentifizierungsanfrage, das angeordnet ist, eine Authentifizierungsanfrage an einen Teilnehmerserver zu senden, wobei die Anfrage die Kennung des mobilen Endgeräts umfasst,
- ein Modul (407) zum Empfang einer Authentifizierungsantwort, das angeordnet ist, eine Antwort auf die Authentifizierungsanfrage zu empfangen, wobei die Antwort Sicherheitsinformationen umfasst, die dem mobilen Endgerät eigen sind,
- ein Modul (408) zum Senden von Sicherheitsinformationen, das angeordnet ist, eine Antwort auf die Anforderung von Sicherheitsinformationen an die Einheit zur lokalen Verwaltung der Mobilität zu senden, wobei die Antwort die Sicherheitsinformationen umfasst, die dem mobilen Endgerät eigen sind.

8. System zur Registrierung eines mobilen Endgeräts in einem Mobilkommunikationsnetz, umfassend:
- einen Netzknoten, der eine Basisstation, die angeordnet ist, Funkaustausch mit dem mobilen Endgerät zu verwalten, einen lokalen Gateway, der angeordnet ist, Funktionalitäten eines Dienst-Gateways und eines Paket-Gateways des Netzes bereitzustellen, und eine Einheit zur lokalen Verwaltung der Mobilität nach Anspruch 6 umfasst, und
- eine Proxy-Einheit zur Verwaltung der Mobilität nach Anspruch 7.

9. Computerprogramm, das sich auf einem Datenträger befindet und in den Speicher einer Einheit zur lokalen Verwaltung der Mobilität geladen werden kann, das Programm umfassend Code-Abschnitte für die Ausführung der Schritte des Verfahrens zur Registrierung eines mobilen Endgeräts in einem Netz nach einem der Ansprüche 1 bis 3, wenn das Programm auf der Einheit ausgeführt wird.

10. Datenträger, auf dem das Programm nach Anspruch 9 gespeichert ist.

11. Computerprogramm, das sich auf einem Datenträger befindet und in den Speicher einer Proxy-Einheit zur lokalen Verwaltung der Mobilität geladen werden kann, das Programm umfassend Code-Abschnitte für die Ausführung der Schritte des Verfahrens zur Registrierung eines mobilen Endgeräts in einem Netz nach einem der Ansprüche 4 bis 5, wenn das Programm auf der Einheit ausgeführt wird.

12. Datenträger, auf dem das Programm nach Anspruch 11 gespeichert ist.

## Claims

1. Method for registering a mobile terminal in a mobile communication network via a base station, collocated with a local mobility management entity in a network node, an access link between the network node and the core network being switched from a normal mode of operation to a degraded mode of operation, the method, implemented by the local mobility management entity, comprising:
- a step (E1) of reception of an attachment request, retransmitted by the base station and originating from the mobile terminal, said request comprising an identifier of the mobile terminal,
- a step (E2) of sending, to a proxy mobility management entity acting as intermediary between the network node and the core network, of a request for security information specific to the mobile terminal, said request comprising the identifier of the mobile terminal,
- a step (E11) of reception of a response to the request for security information, said response comprising security information specific to said mobile terminal, said security information originating from a subscriber server of the network,
- a step (E12) of authentication of said terminal by means of the security information received.

2. Method according to Claim 1, further comprising a step (E21) of sending of a subscription data request to the proxy mobility management entity, the sending of said request being representative of a successful registration of the mobile terminal in the network.

3. Method according to Claim 2, further comprising a step (E13) of sending to the proxy mobility management entity of a request to check the identity of the mobile terminal.

4. Method for registering a mobile terminal in a mobile communication network via a base station, collocated with a local mobility management entity in a network node, an access link between the network node and the core network being switched from a normal mode of operation to a degraded mode of operation, the method, implemented by a proxy mobility management entity acting as intermediary between the network node and the core network comprising:
- a step of reception, from the local mobility management entity, of a security information request, said request comprising an identifier of the mobile terminal,
- a step (E9) of sending of an authentication request to a subscriber server of the network, said request comprising the identifier of the mobile terminal,
- a step (E10) of reception, from the subscriber server, of an authentication response, said response comprising security information specific to the mobile terminal,
- a step (E11) of sending, to the local mobility management entity, of a response to the security information request, said response comprising the security information received.

5. Method according to Claim 4, comprising:
- a step of reception of a request for subscription data originating from the local mobility management entity, the reception of said request being representative of a successful registration of the mobile terminal in the network and triggering an update of location information in the subscriber server,
- a step of sending of a response to the request for subscription data, said response comprising subscription data specific to the mobile terminal.

6. Local mobility management entity of a mobile communication network, collocated with a base station in a network node, arranged to manage mobility when an access link between the network node and the core network is switched from a normal mode of operation to a degraded mode of operation, said entity comprising:
- a module (305) for receiving attachment requests, arranged to receive, from a mobile terminal via the base station, a network attachment request, said attachment request comprising an identifier of the mobile terminal,
- a module (306) for sending information requests, arranged to send, to a proxy mobility management entity acting as intermediary between the network node and the core network, a request for security information specific to the mobile terminal, said request comprising the identifier of the mobile terminal,
- a module (307) for receiving responses, arranged to receive, from the proxy mobility management entity, a response to the security information request, said response comprising security information specific to said mobile terminal, said security information originating from a subscriber server of the network,
- an authentication module (308), arranged to authenticate the terminal by means of the security information received.

7. Proxy mobility management entity of a mobile communication network, arranged to act as intermediary between a network node and the core network when an access link between the network node and the core network is switched from a normal mode of operation to a degraded mode of operation, said entity comprising:
- a module (405) for receiving security information requests, arranged to receive, from a local mobility management entity collocated with a base station in the network node, a security information request, said request comprising an identifier of the mobile terminal,
- a module (406) for sending an authentication request, arranged to send, to a subscriber server, an authentication request, said request comprising the identifier of the mobile terminal,
- a module (407) for receiving an authentication response, arranged to receive a response to the authentication request, said response comprising security information specific to the mobile terminal,
- a module (408) for sending security information, arranged to send, to the local mobility management entity, a response to the security information request, said response comprising security information specific to the mobile terminal.

8. System for registering a mobile terminal in a mobile communication network, comprising:
- a network node comprising a base station, arranged to manage radio interchanges with the mobile terminal, a local gateway, arranged to supply functionalities of a service gateway and packet gateway of the network, and a local mobility management entity according to Claim 6, and
- a proxy mobility management entity according to Claim 7.

9. Computer program on a data medium that can be loaded into the memory of a local mobility management entity, the program comprising code portions for the execution of the steps of the method for registering a mobile terminal in a network according to any one of Claims 1 to 3, when the program is run on said entity.

10. Data medium in which the program according to Claim 9 is stored.

11. Computer program on a data medium that can be loaded into the memory of a proxy mobility management entity, the program comprising code portions for the execution of the steps of the method for registering a mobile terminal in a network according to one of Claims 4 and 5, when the program is run on said entity.

12. Data medium in which the program according to Claim 11 is stored.
